# EUROPÄISCHE PATENTSCHRIFT

(11) **EP 3 671 195 B1**
(45) Veröffentlichungstag und Bekanntmachung des Hinweises auf die Patenterteilung: **12.02.2025**
(21) Anmeldenummer: 18213202.7
(22) Anmeldetag: 17.12.2018
(51) Int. Cl.: G01N 27/14

(54) **THERMORESISTIVER GASSENSOR**
THERMORESISTIVE GAS SENSOR
CAPTEUR DE GAZ THERMORÉSISTIF

(43) Veröffentlichungstag der Anmeldung: 24.06.2020
(73) Patentinhaber: Siemens Aktiengesellschaft, 80333 München (DE)
(72) Erfinder: Klehr, Stefan, 76764 Rheinzabern (DE); Marcaux, Günter, 76187 Karlsruhe (DE)
(74) Vertreter: Siemens Patent Attorneys

(56) Entgegenhaltungen:
- EP-A1- 1 510 814
- EP-A1- 3 196 659
- EP-A1- 3 546 931
- US-A1- 2002 020 689
- US-A1- 2002 038 508
- US-A1- 2003 015 034
- US-A1- 2004 056 321
- US-A1- 2007 204 688
- US-B2- 7 010 971
- RASTRELLO F ET AL: "Thermal Conductivity Detector for gas-chromatography: Acquisition system and experimental measurements", 2013 IEEE INTERNATIONAL INSTRUMENTATION AND MEASUREMENT TECHNOLOGY CONFERENCE (I2MTC), IEEE, 13 May 2012 (2012-05-13), pages 1226 - 1230, XP032451399, ISSN: 1091-5281, ISBN: 978-1-4673-4621-4, DOI: 10.1109/I2MTC.2012.6229304

## Beschreibung

Die Erfindung betrifft einen thermoresistiven Gassensor.

Ein thermoresistiver Sensor oder Detektor ist ein Messfühler mit einem elektrischen Widerstand, dessen Wert sich mit der Temperatur reproduzierbar ändert. Solche Widerstände werden auch als Thermistoren bezeichnet, wobei zwischen Thermistoren mit positivem Temperaturkoeffizient (PTC, Kaltleiter) und Thermistoren mit negativem Temperaturkoeffizient (NTC, Heißleiter) unterschieden wird. Zu den Kaltleitern zählen insbesondere Metalle, wobei vorzugsweise Platin und Nickel verwendet werden, und als nichtmetallische Materialien polykristalline Keramiken, z. B. auf der Basis von Bariumtitanat, und dotierte Halbleiter, z. B. Silizium, mit Störstellenerschöpfung. Zu den Heißleitern zählen insbesondere reine oder dotierte Halbleiter außerhalb des Bereichs der Störstellenerschöpfung sowie polykristalline Halbleiter aus Metalloxiden.

Thermoresistive Gassensoren finden beispielsweise als Strömungsfühler oder Wärmeleitfähigkeitsdetektoren in der Gasanalyse oder in der Medizintechnik (z. B. Anästhesie- oder Beatmungsgeräte) Anwendung.

Thermische Strömungssensoren finden beispielsweise in der Gasanalyse oder in der Medizintechnik (z. B. Anästhesie- oder Beatmungsgeräte) Anwendung. Das zugrundeliegende Messprinzip beruht auf der Verwendung eines Sensorelements, das elektrisch beheizt wird und dessen elektrischer Widerstand von der Temperatur abhängt. Bei Umströmung mit einem Fluid findet ein Wärmetransport in das Fluid statt, der sich mit der Strömungsgeschwindigkeit verändert. Durch Messung der elektrischen Größen des Sensorelements können die Strömung detektiert und ihre Geschwindigkeit oder der Massenstrom des Fluids gemessen werden. Insbesondere zur Erfassung von Wechselströmungen kann das Sensorelement zusammen mit einem stromaufwärts und/oder stromabwärts angeordneten weiteren Sensorelement in der Strömung angeordnet sein, so dass ein Übersprechen in Form eines - bei periodisch wechselnder Strömung entsprechend wechselnden - Wärmeaustauschs zwischen den Sensorelementen stattfindet. Dies kann in an sich bekannter Weise mittels einer elektrischen Messbrücke gemessen werden, in der die Sensorelemente in unterschiedlichen Brückenzweigen angeordnet sind.

Wärmeleitfähigkeitsdetektoren dienen zum Nachweis bestimmter flüssiger oder gasförmiger Stoffe (Fluide) anhand ihrer stofftypischen Wärmeleitfähigkeit und werden insbesondere in der Gaschromatographie eingesetzt. Dazu werden die nachzuweisenden Stoffe nach ihrer chromatographischen Trennung nacheinander in einem Kanal an einem dort angeordneten und elektrisch beheizten Heizelement (z. B. einem Heizfaden aus Gold oder Platin) vorbeigeführt, wobei je nach Wärmeleitfähigkeit des vorbeiströmenden Stoffes mehr oder weniger Wärme von dem Heizelement auf die Kanalwandung abgeleitet wird und das Heizelement dementsprechend mehr oder weniger abkühlt. Durch die Abkühlung des Heizelements ändert sich dessen elektrischer Widerstand, was detektiert wird. Wird das Heizelement auf konstante Temperatur geregelt, so wird die sich ändernde elektrische Heizleistung detektiert. Das Heizelement ist üblicherweise in einer Messbrücke angeordnet, die weitere Widerstände und ein weiteres Heizelement in einem von einem Referenzfluid durchströmten weiteren Kanal enthält.

Ein solcher Wärmeleitfähigkeitsdetektor mit mäanderförmigen Heizfäden ist beispielsweise aus Rastrello F. et al: "Thermal Conductivity Detector for gas-chromatography: Acquisition system and experimental measurements", 2013 IEEE INTERNATIONAL INSTRUMENTATION AND MEASUREMENT TECHNOLOGY CONFERENCE (I2MTC), IEEE, 13. Mai 2012 (2012-05-13), Seiten 1226-1230 bekannt.

Aus der WO 2009/153099 A1 ist ein als silizium-basierter Mikroströmungsfühler für die Gasanalyse ausgebildeter Strömungssensor bekannt. Der bekannte Strömungssensor besteht aus zwei plattenförmigen Bauteilen, die jeweils eine fensterartige Öffnung für das durchströmende Gas und eine sich darüber erstreckende Gitterstruktur aus Silizium aufweisen. Die beiden Bauteile sind zu einem Plattenverbund zusammengefügt, wobei die beiden Öffnungen miteinander fluchten und die senkrecht zur Strömungsrichtung ausgerichteten Gitterstrukturen in Richtung der Strömung hintereinander liegen. Die Gitterstrukturen werden aus kristallinem Silizium beispielsweise durch Verwendung von Silicon-On-Insulater (SOI-) Wafermaterial erzeugt und sind mäanderförmig ausgebildet.

Im Vergleich zu ähnlichen Metallgittern mit elektrischen Widerstandwerten von wenigen Ohm, wie sie beispielsweise aus der DE 1 698 048 A1, DE 32 04 425 A1 oder WO 00/59824 A1 bekannt sind, liegt der Widerstand des siliziumbasierten Gitters im Bereich von einigen Kiloohm. Dieser höhere Widerstandswert führt zu einem verbesserten Signal-/Rausch-Verhältnis. Des Weiteren führt der im Vergleich zu Metallen grö-ßere Widerstandskoeffizient zu einer höheren Messempfindlichkeit, das heißt zu höheren temperaturabhängigen Widerstandsänderungen.

Die Gitterstrukturen des aus der erwähnten WO 2009/153099 A1 bekannten Strömungssensors können aus mehreren nebeneinanderliegenden Sub-Gitterstrukturen bestehen, die ebenfalls mäanderförmig ausgebildet sind und beispielsweise zur weiteren Erhöhung des Widerstandes in Reihe geschaltet werden können. Insbesondere können vier Gitter zu einer elektrischen Messbrücke verschaltet werden, wobei die in der Messbrücke einander diagonal gegenüberliegenden Gitter jeweils ein Gitterpaar mit einer gemeinsamen Gitterebene bilden und die beiden unterschiedlichen Gitterpaare in der zu messenden Strömung hintereinander liegen. Dadurch ergibt sich eine wesentlich höhere Messempfindlichkeit als bei Messbrücken, bei denen nur zwei Brückenwiderstände von Widerstandsgittern in der zu messenden Strömung gebildet werden und die beiden anderen Brückenwiderstände aus Festwiderständen bestehen.

Aus der WO 2017/194319 A1 ist ebenfalls ein Strömungssensor mit vier thermoresistiven Sensorelementen bekannt, die zu einer elektrischen Messbrücke verschaltet sind. Die Sensorelemente sind in Strömungsrichtung nacheinander angeordnet und dazu beispielsweise in einer Reihe nebeneinander auf einer Seite eines Substrats als Dünnschichtsensorelemente mit mäanderförmigen Widerstandstrukturen ausgebildet. Die zu messende Strömung fließt daher nicht durch die mäanderförmigen Widerstandstrukturen hindurch, sondern an ihnen entlang. Die beiden ersten Sensorelemente der Reihe liegen in der Messbrücke einander diagonal gegenüber; dasselbe gilt für beiden letzten Sensorelemente.

Die US 2003/015034 A1 offenbart einen Strömungssensor mit einem Heizelement und einem Temperatursensor, die in Strömungsrichtung des zu messenden Fluids hintereinander auf einer Membran angeordnet und dort als mäanderförmige Widerstandsschichten ausgebildet sind. Sowohl die Heizelementschicht als auch die Thermometerschicht können eine Leiterbahnkonfiguration aufweisen, bei der individuelle Widerstandselemente parallel verbunden sind.

Bei einem aus der US 7,010,971 B2 bekannten Strömungssensor sind ein Heizelement und vier Temperatursensoren auf einer Membran ausgebildet, wobei die Heizelemente in Strömungsrichtung paarweise vor und hinter dem Heizelement angeordnet sind. Die Temperatursensoren sind als mäanderförmige Widerstandsschichten ausgebildet, die bei jedem Paar ineinander verschachtelt angeordnet und in einander diagonal gegenüberliegenden Zweigen einer elektrischen Messbrücke verschaltet sind.

Bei einem aus der JP H08219836 A bekannten ähnlichen Strömungssensor sind die in der Messbrücke jeweils einander diagonal gegenüberliegenden Sensorelemente nicht hintereinander in der Strömung angeordnet, sondern in Strömungsrichtung auf gleicher Höhe, aber auf unterschiedlichen, voneinander abgewandten Seiten des Substrats.

Bei einem aus der WO 2007/101185 A1 bekannten weiteren ähnlichen Strömungssensor sind die vier Sensorelemente mit ihren mäanderförmigen Widerstandstrukturen wieder auf einer Seite des Substrats angeordnet. Die in der Messbrücke jeweils einander diagonal gegenüberliegenden Sensorelemente sind nicht hintereinander in Strömungsrichtung, sondern interdigital angeordnet, d. h., die Mäanderschlingen der Sensorelemente greifen in Form einer Interdigitalstruktur ineinander.

Aus der WO 2009/095494 A1 ist ein Wärmeleitfähigkeitsdetektor mit einem elektrisch beheizbaren Heizfaden bekannt, der in der Mitte und in Längsrichtung eines Kanals von einem Fluid umströmbar gelagert ist und dazu an seinen beiden Enden an zwei den Kanal durchquerenden elektrisch leitenden Trägern gehalten ist. Um eine hohe Standzeit und Inertheit gegenüber chemisch aggressiven Gasgemischen zu erhalten, bestehen der Heizfaden und die Träger aus dotiertem Silizium. Das dotierte Silizium kann unter Zwischenlage einer Isolierschicht aus Siliziumdioxid auf einem Siliziumsubstrat aufgebracht werden, wobei in Ätzprozessen durch Strukturieren des Siliziumsubstrats, der Siliziumdioxid-Schicht und der Schicht aus dem dotiertem Silizium die Träger und der Heizfaden gebildet und der Kanal in der Trägerplatte ausgeformt werden. Angesichts der Sprödigkeit von Silizium wird in der EP 3 096 133 A1 zur Erhöhung der mechanischen Stabilität vorgeschlagen, den beidseitig eingespannten Heizfaden durch einen extrem dünnen Kragbalken aus dotiertem Silizium zu ersetzen.

Die Druckschrift US 2003/015034 A1 ist ein Dünnfilm-Durchflusssensor bekannt, der Widerstandselemente umfasst, die zwischen zwei Isolationsfilmen angeordnet sind. Die Widerstandselemente sind in einer Ebene angeordnet, die im Wesentlichen flach von einer Gasströmung überstrichen wird. Anhand der Widerstandselemente ist entlang der Strömungsrichtung der Gasströmung eine Temperaturdifferenz ermittelbar, über die wiederum eine Strömungsgeschwindigkeit der Gasströmung ermittelbar ist.

Aus der Patentschrift US 7,010,971 B2 ist ein Durchflusssensor bekannt, der ein Heizwiderstand aufweist und einen Thermowiderstand, dessen Widerstandswert messbar ist. Der Durchflusssensor umfasst Temperatursensoren, die in mäanderförmigen Schlaufen angelegte Leiterbahnen umfassen. Die Temperatursensoren sind flächig auf einer Ebene angeordnet, die im Wesentlichen flach von einer Gasströmung überstrichen wird. Mittels der Temperatursensoren ist eine Temperaturdifferenz erfassbar, anhand der wiederum eine Strömungsgeschwindigkeit der Gasströmung feststellbar ist.

Des Weiteren offenbart US 2002/038508 A1 ein Verfahren zum Herstellen von selbstragenden Mikrostrukturen, die in Messvorrichtungen für schwache Gasströmungen einsetzbar sind. Die Mikrostrukturen sind in Form von mäanderförmigen Stegen ausgebildet, die elektrisch in Reihe geschaltet sind.

Aus der Patentanmeldung US 2007/0204688 A1 ist eine Wheatstone-Brücke bekannt, die in einem Durchflusssensor einsetzbar ist. Der Durchflusssensor umfasst Wärmeerfassungsmittel, die mäanderförmige Leiter umfassen und in einer Ebene angeordnet sind. Die Ebene wird zu Messung des Durchflusses im Wesentlichen flach angeströmt, wobei die Wärmeerfassungsmittel in Strömungsrichtung hintereinander liegen.

Wegen des hohen elektrischen Widerstands des Silizium-Heizfadens wird im Vergleich zu Heizfäden aus Metall (üblicherweise Gold oder Platin) eine höhere Detektionsempfindlichkeit des Wärmeleitfähigkeitsdetektors erreicht. Dies bedingt aber auch einen höheren Spannungsabfall über dem Heizwiderstand, wenn dieser mit einer bestimmten Heizleistung auf eine gewünschte Temperatur aufgeheizt wird, so dass ggf. ein eigensicherer Betrieb in explosionsgefährdeten Bereichen nicht möglich ist. In der EP 3 096 137 A1 wird daher vorgeschlagen, den Silizium-Heizfaden in zwei oder mehr Abschnitte aufzuteilen, die in der Strömung des Fluids physikalisch in Reihe angeordnet sind und elektrisch parallelgeschaltet sind.

Ein thermoresistiver Gassensor mit einem von dem Gas durchströmbaren flachen Gitter, dessen aus einem Halbleitermaterial bestehenden und elektrisch parallel geschalteten Gitterstege in der Gitterebene parallel nebeneinander angeordnet und s-förmig verlaufend ausgebildet sind, ist Gegenstand der älteren noch nicht veröffentlichten Europäischen Patentanmeldung mit dem amtlichen Aktenzeichen EP 18164748.8.

Aus der US 2004/056321 A1 ist ein planarer Heizer bekannt, bei dem auf einem Substrat ein Heizelement ausgebildet ist, das aus parallel nebeneinander s-förmig verlaufenden und an den Enden elektrisch parallel geschalteten Strängen besteht.

Der Erfindung liegt daher die Aufgabe zugrunde, einen thermoresistiven Gassensor anzugeben, der gleichermaßen als Strömungsfühler oder Wärmeleitfähigkeitsdetektor verwendbar ist, sich durch eine hohe Messempfindlichkeit und mechanische Stabilität auszeichnet und einfach und kostengünstig herstellbar ist.

Gemäß der Erfindung wird die Aufgabe durch den in Anspruch 1 angegebenen thermoresistiven Gassensor gelöst.

Vorteilhafte Weiterbildungen des erfindungsgemäßen thermoresistiven Gassensors, ein mindestens zwei solcher Gassensoren enthaltender Strömungssensor sowie ein Wärmeleitfähigkeitsdetektor auf der Basis des erfindungsgemäßen Gassensors sind den weiteren Ansprüchen zu entnehmen.

Gegenstand der Erfindung ist somit ein thermoresistiver Gassensor mit zwei gleichen, flachen und von einem Gas durchströmbaren Gittern, die aus einem Halbleitermaterial mit einer vorgegebenen Leitfähigkeitsart bestehen und in einander diagonal gegenüberliegenden Zweigen einer elektrischen Messbrücke verschaltet sind, wobei jedes Gitter parallel nebeneinander verlaufende und an den Enden elektrisch parallel geschaltete Gitterstege aufweist und die Gitterstege der beiden Gitter abwechselnd nebeneinander in einer gemeinsamen Gitterebene liegend sich über eine Fensteröffnung in einer Trägerplatte erstrecken.

Da die beiden Gitter gleich oder identisch sind und ihre Gitterstege abwechselnd nebeneinander in ein und derselben Gitterebene liegen, sind beide Gitter in praktisch identischer Weise einem Gas ausgesetzt, das durch die Fensteröffnung die Gitter erreicht und, je nach Anwendung, zwischen den Gitterstegen hindurch strömt. Die Trägerplatte wird an der Fensteröffnung vom Gas senkrecht durchströmt. Jede Änderung in der Zusammensetzung, der Strömungsgeschwindigkeit oder in dem Strömungsprofil des Gases erreicht beide Gitter gleichzeitig und beeinflusst ihren temperaturabhängigen elektrischen Widerstand gleichzeitig und in gleicher Größe. Die Empfindlichkeit der Messbrücke mit den in ihr diagonal angeordneten Gittern ist bei mindestens gleicher Genauigkeit doppelt so groß, wie bei einem Gassensor mit nur einem Gitter und einem in der Messbrücke diagonal gegenüberliegenden Festwiderstand.

Bei dem erfindungsgemäßen Gassensor sind die Gitter nicht mäanderförmig ausgebildet, sondern bestehen aus sowohl physikalisch als auch elektrisch parallelen Stegen. Die Gitterstege bilden mit ihrem Halbleitermaterial temperaturabhängige Widerstände, die im Vergleich zu Metall hochohmig sind und daher, wie oben bereits erwähnt, eine hohe Detektionsempfindlichkeit des Sensors ermöglichen. Da aber die Stege bzw. die von ihnen gebildeten Widerstände parallel geschaltet sind, ist der Gesamtwiderstand des jeweiligen Gitters und damit die bei einer vorgegebenen Heizleistung über dem Gitter abfallende elektrische Spannung gering, was einen eigensicheren Betrieb des Gassensors in explosionsgefährdeten Bereichen ermöglicht.

Als im Vergleich zu Metall hochohmiges Material für die Halbleiterschicht kommt insbesondere dotiertes Halbleitermaterial in Betracht, so z. B. Silizium, das sich auch durch seine Inertheit gegenüber chemisch aggressiven Gasgemischen auszeichnet. In Abhängigkeit von der Dotierung kann ein positiver Temperaturkoeffizient (PTC) oder negativer Temperaturkoeffizient (NTC) realisiert werden. Durch die Verwendung von monokristallinem Halbleitermaterial wird eine gute mechanische Stabilität erreicht, wozu auch die Richtungsabhängigkeit des Elastizitätsmoduls und des piezoresistiven Koeffizienten genutzt werden kann.

Zwar weisen auch die mäanderförmigen Gitter der eingangs erwähnten bekannten Gassensoren parallele Gitterabschnitte auf, jedoch sind diese elektrisch in Reihe geschaltet.

Die halbleiterbasierten Gitter können auf höhere Temperaturen aufgeheizt werden, als bekannte Metallgitter. Die Gitterstege in der Gitterebene können daher s-förmig verlaufend ausgebildet sein, so dass sie bei Erwärmung und Ausdehnung nicht unkontrolliert ausgelenkt werden oder sogar knicken. Stattdessen bleibt der Abstand zwischen den Stegen erhalten, und sie können sich nicht berühren.

Die Gitterstege können über die Breite der Gitter variierende Querschnittsflächen aufweisen. So können die äußeren Gitterstege mit einer größeren Querschnittsfläche (Breite) als die der inneren Gitterstege ausgebildet werden, um eine gleichmäßige Temperaturverteilung über die Breite des jeweiligen Gitters zu erhalten und zu vermeiden, dass sich die in der Mitte des jeweiligen Gitters befindenden Gitterstege stärker aufheizen als die am Rand des Gitters.

Grundsätzlich können die Gitter auf unterschiedliche Weise, beispielsweise durch Ätzen, Laserschneiden oder 3D-Druck, erzeugt werden. Vorzugsweise ist das Halbleitermaterial in Form einer Halbleiterschicht auf einem die Trägerplatte bildenden Halbleitersubstrat, ggf. unter Zwischenlage einer Isolierschicht, ausgebildet, wobei sich die Halbleiterschicht über die Fensteröffnung in dem Halbleitersubstrat erstreckt und dort in Form der beiden Gitter ausgebildet ist. Außerhalb der Fensteröffnung trägt die Halbleiterschicht in vier sich mindestens über die Breite der Gitter erstreckenden Bereichen Metallisierungen, die an den vier Enden der beiden Gitter die Gitterstege elektrisch miteinander verbinden. Die Metallisierungen können mit separat ausgebildeten Kontaktflächen zur Kontaktierung des Gassensors verbunden sein oder selbst die Kontaktflächen bilden. Weiterhin enthält die Halbleiterschicht außerhalb der Fensteröffnung Trennstrukturen, die vier Enden der Gitter voneinander isolieren. Die Trennstrukturen können dadurch gebildet werden, dass das Halbleitermaterial bereichsweise entfernt oder nicht dotiert ist. Dort, wo z. B. eine Metallisierung zur Verbindung der Gitterstege eines der beiden Gitter über die Gitterstege des anderen Gitters hinweg führt, kann die Trennstruktur durch Isolierlagen zwischen den Gitterstegen des anderen Gitters und der Metallisierung gebildet werden.

Der erfindungsgemäße Gassensor findet in vorteilhafter Weise in einem Strömungssensor Verwendung, wo er zusammen mit mindestens einem weiteren baugleichen Gassensor derart in einer zu messenden Gasströmung angeordnet ist, dass die Gitter hintereinander und senkrecht zur Strömungsrichtung liegen, und wobei alle vier Gitter der beiden Gassensoren zu der elektrischen Messbrücke verschaltet sind, in der die Gitter jedes der beiden Gassensoren jeweils einander diagonal gegenüberliegen. Die Messbrücke wird somit vollständig aus den vier Gittern des Strömungssensors gebildet, so dass keine Festwiderstände zur Komplettierung der Messbrücke benötigt werden. Je nach Richtung der zu messenden Gasströmung wird Wärme von den beiden Gittern des einen Gassensors auf die Gitter des anderen Gassensors übertragen, so dass die Gitter der beiden unterschiedlichen Gassensoren entgegengesetzte temperaturabhängige Widerstandsänderung erfahren, während innerhalb jedes Gassensors die dortigen beiden Gitter jeweils dieselbe Widerstandsänderung erfahren. Aufgrund der oben angegebenen diagonalen Verschaltung der Gitter in der Messbrücke wird eine maximale Empfindlichkeit des Strömungssensors erreicht.

Für die Herstellung des Strömungssensors kann es von Vorteil sein, wenn sich die vier oben erwähnten Metallisierungen in einer Richtung um ein vorgegebenes Maß über die Breite der Gitter hinaus erstrecken, um dort Kontaktflächen zu bilden, und wenn das Halbleitersubstrat (mitsamt der darauf liegenden Halbleiterschicht und ggf. Isolierschicht) in der anderen Richtung spiegelsymmetrisch zu den Kontaktflächen angeordnete durchgehende Öffnungen enthält. Die beiden Gassensoren können dann in einfacher Weise um 180° zueinander versetzt aufeinander montiert werden, wobei die Kontaktflächen des unteren Gassensors durch die Öffnungen des darauf liegenden Gassensors hindurch zugänglich sind und somit beide Gassensoren von einer Seite, der Oberseite, her kontaktiert werden können.

Der erfindungsgemäße Gassensor findet weiterhin in vorteilhafter Weise in einem Wärmeleitfähigkeitsdetektor Verwendung, wo er in einer Messgasströmung mit den Gittern längs zur Strömungsrichtung angeordnet sein kann. Dazu kann der Gassensor zwischen zwei Bauteilen gehalten sein, die jeweils eine zu den Gittern hin offene und mit der Fensteröffnung in der Trägerplatte fluchtende Mulde enthalten. Die beiden Mulden bilden zusammen einen Messraum, in dem die Gitter von dem Messgas umströmt werden, welches über Gasanschlüsse in den Messraum eingeleitet und aus diesem herausgeleitet wird. Die beiden Gasanschlüsse können derart ausgebildet sein, dass sie sich in Richtung zu dem Messraum hin auf die Breite der Gitter erweitern, so dass das Messgas über die gesamte Fläche der Gitter strömt. Jeder der beiden Bauteile kann jeweils einen der beiden Gasanschlüsse enthalten. Zur Vereinfachung des konstruktiven Aufbaus des Wärmeleitfähigkeitsdetektors und seiner Verwendung können sich alternativ beide Gasanschlüsse in einem der beiden Bauteile befinden.

Bei Verwendung in einem Gaschromatographen, in dem das Messgas in einen Trägergasstrom dosiert und danach durch eine Trennsäule oder Trennsäulenschaltung zur Trennung unterschiedlicher Komponenten des Messgases geleitet wird, kann in vorteilhafter Weise ein weiterer baugleicher thermoresistiver Gassensor in der Referenzgasströmung und mit den Gittern längs zur Strömungsrichtung angeordnet sein, wobei alle vier Gitter der beiden Gassensoren zu der elektrischen Messbrücke verschaltet sind, in der die Gitter jedes der beiden Gassensoren jeweils einander diagonal gegenüberliegen.

Der erfindungsgemäße thermoresistive Gassensor ist gleichermaßen für den Einsatz in einem Strömungssensor, beispielsweise in einem nichtdispersiven Infrarot-(NDIR)-Analysengerät oder einem nach dem paramagnetischen Wechseldruckverfahren arbeitenden Gasanalysator, und in einem Wärmeleitfähigkeitsdetektor für die Gaschromatographie oder zur Analyse binärer Gasgemische geeignet. Die elektrische Verschaltung des Gassensors, z. B. in einer Brückenschaltung, ist an sich bekannt und nicht Gegenstand der Erfindung.

Zur weiteren Erläuterung der Erfindung wird im Folgenden auf die Figuren der Zeichnung Bezug genommen; im Einzelnen zeigen:
- FIG. 1: ein Ausführungsbeispiel des erfindungsgemä-ßen Gassensors mit zwei Gittern in Draufsicht,
- FIG. 2: einen Querschnitt durch den Gassensor entlang einer Linie AA' in FIG. 1,
- FIG. 3: einen Querschnitt durch den Gassensor entlang einer Linie BB' in FIG. 1,
- FIG. 4: eine Messbrücke, in der die Gitter des Gassensors als Brückenwiderstände verschaltet sind,
- FIG. 5, 6 und 7: weitere Ausführungsbeispiel des erfindungsgemäßen Gassensors in Draufsicht,
- FIG. 8: ein Ausführungsbeispiel eines Strömungssensors mit zwei Gassensoren in perspektivischer Explosionsdarstellung,
- FIG. 9: den Strömungssensor nach Fig. 6 mit zusammengefügten Gassensoren,
- FIG. 10 und 11: ein Ausführungsbeispiel eines Wärmeleitfähigkeitsdetektors mit einem Gassensor in einem Schnitt in Längsrichtung und in Querrichtung zu den Gittern.

Die Darstellungen in den Figuren sind schematisch und nicht maßstäblich, können aber qualitative Größenverhältnisse anzeigen.

Gleiche oder ähnliche Komponenten in unterschiedlichen Figuren sind mit gleichen Bezugsziffern versehen.

Die Erfindung beschränkt sich in ihren Ausführungen nicht auf die in den Figuren dargestellten, bevorzugten Ausführungsformen. Vielmehr ist eine Vielzahl von Varianten denkbar, welche in der dargestellten Lösung von der Erfindung auch bei grundsätzlich anders gearteten Ausführungsformen Gebrauch machen den Ansprüchen entsprechend.

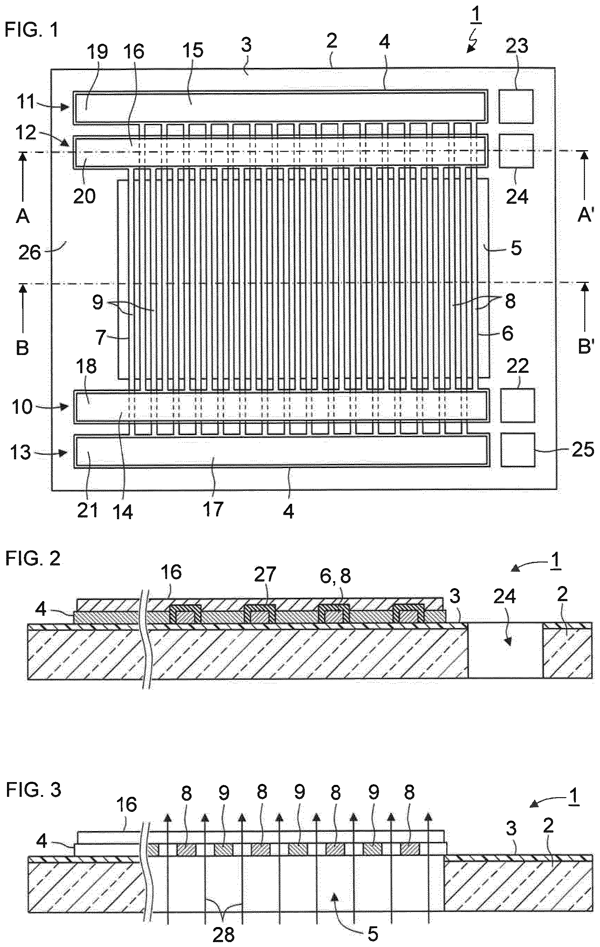

FIG. 1 zeigt ein Ausführungsbeispiel des erfindungsgemäßen Gassensors 1 in Draufsicht.

FIG. 2 zeigt denselben Gassensor 1 in einem Querschnitt entlang der Linie AA'.

FIG. 3 zeigt den Gassensor 1 in einem Querschnitt entlang der Linie BB'.

Der Gassensor 1 weist eine Trägerplatte 2 in Form eines Halbleitersubstrats beispielsweise aus Silizium auf, auf dem unter Zwischenlage einer Isolierschicht 3 aus, z. B., Siliziumdioxid ein Halbleitermaterial in Form einer Halbleiterschicht 4 aufgebracht ist. Das Halbleitermaterial weist eine z. B. durch Dotierung vorgegebene Leitfähigkeitsart auf, wobei es im Vergleich zu Metall hochohmig leitend ist. Die Trägerplatte 2 und die darüber liegende Isolierschicht 3 enthalten eine fensterartige Aussparung (Fensteröffnung) 5, über die sich die Halbleiterschicht 4 erstreckt und dort unter Bildung von zwei gleichen Gittern 6, 7 strukturiert ist. Die beiden Gitter 6, 7 bestehen jeweils aus einer Vielzahl von Gitterstegen 8 bzw. 9, die in einer gemeinsamen Gitterebene parallel verlaufen und abwechselnd nebeneinander liegen. Die Fensteröffnung 5 und die Gitter 6, 7 können durch einen Ätzprozess erzeugt werden. Die Gitterstege 8, 9 bilden hochohmige Widerstände, deren Widerstandswerte durch die Länge und die Querschnittsfläche der Gitterstege 8, 9 festgelegt ist.

Die Gitterstege 8, 9 sind an den Enden 10, 11, 12, 13 der beiden Gitter 6, 7 jeweils miteinander verbunden und auf diese Weise elektrisch parallelgeschaltet. Dazu ist die Halbleiterschicht 4 auf dem Halbleitersubstrat 2 beiderseits der Fensteröffnung 5 auf jeweils zwei rechteckförmige Inselbereiche reduziert, die sich jeweils über die Breite der Gitter 6, 7 erstrecken und zwischen denen die Gitterstege 8, 9 über die Fensteröffnung 5 hinüber verlaufen. Die Rechteckinseln aus dem Halbleitermaterial, welches an diesen Stellen bis zur Entartung dotiert und damit maximal leitend sein kann, sind nahezu vollflächig mit Metallisierungen 14, 15, 16, 17 versehen. Wie gezeigt, können sich die Rechteckinseln mit den Metallisierungen 14, 15, 16, 17 in einer Richtung um ein vorgegebenes Maß über die Breite der Gitter 6, 7 hinaus erstrecken, um dort Kontaktflächen 18, 19, 20, 21 zu bilden. In der anderen Richtung kann das Halbleitersubstrat 2 spiegelsymmetrisch zu den Kontaktflächen 18, 19, 20, 21 angeordnete durchgehende Öffnungen 22, 23, 24, 25 enthalten.

Die Enden 10, 11, 12, 13 der beiden Gitter 6, 7, also die Rechteckinseln aus dem Halbleitermaterial mit den Metallisierungen 14, 15, 16, 17, sind durch Trennstrukturen 26 voneinander getrennt oder isoliert, in denen das Halbleitermaterial der Halbleiterschicht 4 bis auf die Isolierschicht 3 hinunter entfernt ist. Dort, wo die Metallisierungen, z. B. 16, des einen Gitters, z. B. 7, über die Gitterstege 8 des anderen Gitters 6 hinweg führt, wird die Trennstruktur 26 durch Isolierlagen 27 gebildet, die die betreffenden Gitterstege 8 umgeben und gegenüber der darüber liegenden Metallisierung 16 und dem Halbleitermaterial des einen Gitters 7 isolieren. Die Isolierlagen 27 können in gleicher Weise wie die Isolierschicht 3 aus Siliziumdioxid bestehen.

Wie bereits erwähnt, bilden die aus dem Halbleitermaterial bestehenden Gitterstege 8, 9 temperaturabhängige Widerstände, die im Vergleich zu Metall hochohmig sind und daher eine hohe Detektionsempfindlichkeit des Gassensors 1 ermöglichen. Da bei jedem der beiden Gitter 6, 7 die Gitterstege 8, 9 elektrisch parallel geschaltet sind, ist der Gesamtwiderstand des betreffenden Gitter 6, 7 und damit die bei einer vorgegebenen Heizleistung über dem Gitter 6, 7 abfallende elektrische Spannung gering, was einen eigensicheren Betrieb des Gassensors 1 in explosionsgefährdeten Bereichen ermöglicht.

Da die beiden Gitter 6, 7 gleich sind und ihre Gitterstege 8, 9 abwechselnd nebeneinander in ein und derselben Gitterebene liegen, sind beide Gitter 6, 7 in praktisch identischer Weise einem Gas 28 ausgesetzt, das durch die Fensteröffnung 5 die Gitter 6, 7 erreicht und zwischen den Gitterstegen 8, 9 hindurch strömt bzw. die Gitterstege 8, 9 umströmt. Jede Änderung in der Zusammensetzung, der Strömungsgeschwindigkeit oder in dem Strömungsprofil des Gases 28 erreicht beide Gitter 6, 7 gleichzeitig und beeinflusst ihren temperaturabhängigen elektrischen Widerstand gleichzeitig und in gleicher Größe.

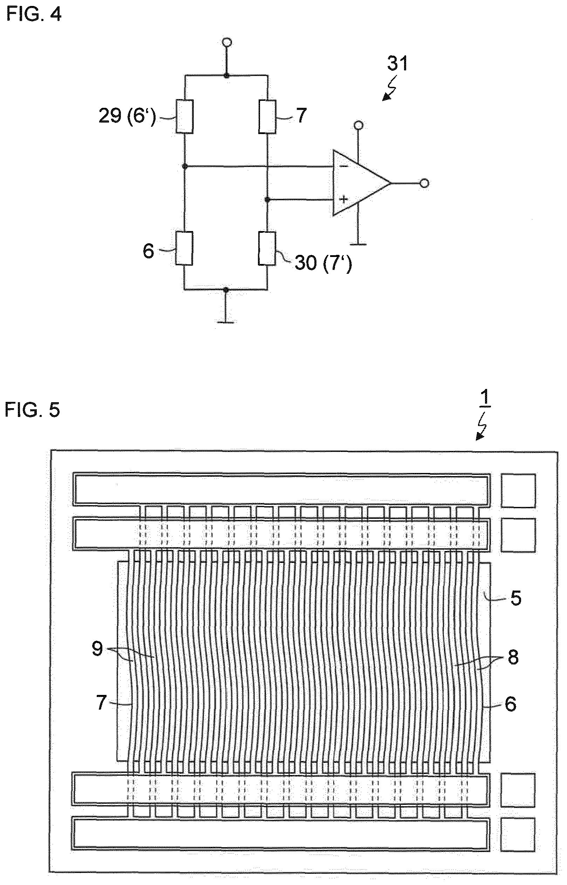

FIG. 4 zeigt die elektrische Anordnung der beiden Gitter 6, 7 des Gassensors 1 zusammen mit weiteren Widerständen (z. B. Festwiderstände) 29, 30 in einer Messbrücke (Wheatstone-Brücke) 31. Die beiden Gitter 6, 7 sind in einander diagonal gegenüberliegenden Zweigen der Messbrücke 31 angeordnet, so dass ihre Empfindlichkeit doppelt so groß ist, wie bei einem herkömmlichen Gassensor mit nur einem Gitter und einem in der Messbrücke diagonal gegenüberliegenden Festwiderstand.

FIG. 5 zeigt eine Variante des Gassensors 1, bei der die Stege 8, 9 der Gitter 6, 7 in der Gitterebene s-förmig verlaufend ausgebildet sind, so dass sie bei Erwärmung und Ausdehnung nicht unkontrolliert ausgelenkt werden oder sogar knicken. Stattdessen bleibt der Abstand zwischen den Stegen 8, 9 erhalten, und sie können sich nicht berühren.

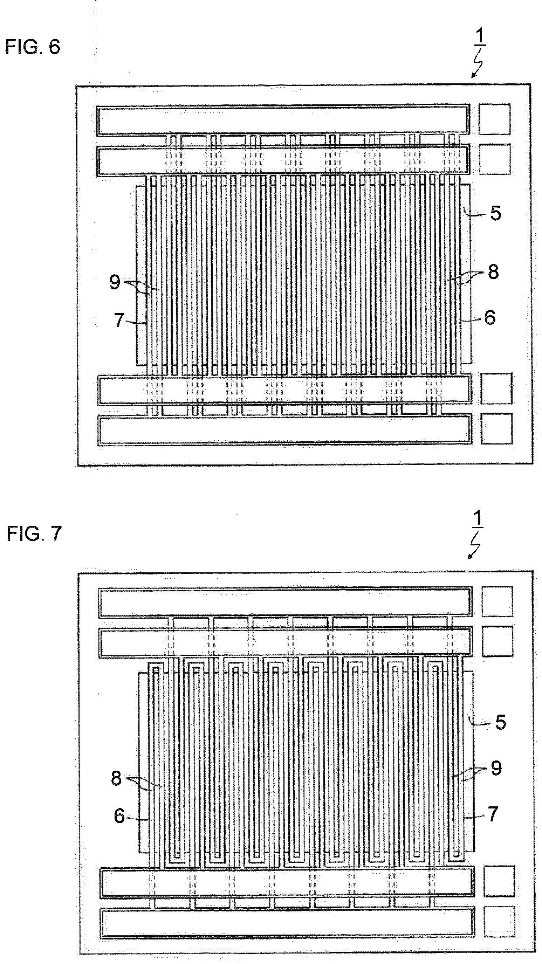

FIG. 6 zeigt eine Variante des Gassensors 1, bei der die Stege 8, 9 der beiden Gitter 6, 7 nicht einzeln, sondern in Zweiergruppen abwechselnd nebeneinander in der gemeinsamen Gitterebene über der Fensteröffnung 5 liegen.

FIG. 7 zeigt eine weitere Variante des Gassensors 1, bei der die Stege 8, 9 der beiden Gitter 6, 7 ebenfalls in Zweiergruppen abwechselnd nebeneinander in der gemeinsamen Gitterebene über der Fensteröffnung 5 liegen. Innerhalb jeder Zweiergruppe sind die beiden Stege nicht parallel, sondern in Form einer U-Schleife in Reihe geschaltet, wodurch der elektrische Widerstand des jeweiligen Gitters 6, 7 verdoppelt wird.

Bei den gezeigten Ausführungsbeispielen kann Querschnitt der Gitterstege z. B. 1 µm x 1 µm bis 100 µm x 100 µm betragen, so dass bei einem Querschnitt von 10 µm x 10 µm und einer Größe der Fensteröffnung 5 von 1 mm x 1 mm die beiden Gitter 6, 7 jeweils bis zu 25 Stege aufweisen würden.

Um eine gleichmäßige Temperaturverteilung über die Breite der Gitter 6, 7 zu erhalten und zu vermeiden, dass sich die in der Mitte des jeweiligen Gitters 6, 7 befindenden Gitterstege 8 bzw. 9 stärker aufheizen als die am Rand des Gitters, können die äußeren Gitterstege 8, 9 mit einer größeren Querschnittsfläche (Breite) als die der inneren Gitterstege 8, 9 ausgebildet werden.

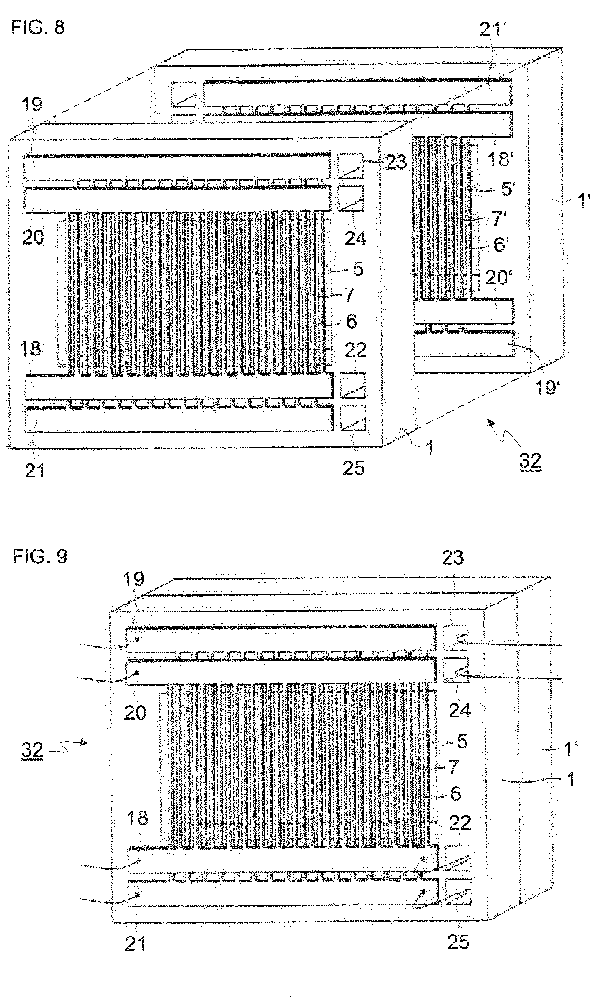

FIG. 8 zeigt in perspektivischer Explosionsdarstellung einen Strömungssensor 32 bestehend aus zwei baugleichen Gassensoren 1, 1' in einem Plattenverbund.

FIG. 9 zeigt denselben Strömungssensor 32 in montiertem Zustand.

Die beiden Gassensoren 1, 1' liegen, ggf. unter Zwischenlage einer Flächendichtung und/oder einer thermisch isolierenden Zwischenlage o.dgl., aufeinander, wobei ihre Fensteröffnungen 5, 5' miteinander fluchten. Die Gitterpaare 6, 7 und 6', 7' der Gassensoren 1, 1' liegen parallel hintereinander in einem Abstand, der im Wesentlichen durch die Dicke des Halbleitersubstrats (Trägerplatte) 2 gegeben ist. Dabei kann der Abstand über eine Zwischenlage exakt auf einen definierbaren Wert eingestellt werden. Die Gassensoren 1, 1' sind um 180° zueinander versetzt, so dass die Kontaktflächen 18', 19', 20', 21' des unteren Gassensors 1' durch die Öffnungen 24, 25, 22, 23 des darauf liegenden Gassensors 1 hindurch zugänglich sind und der Strömungssensor 32 von einer Seite her kontaktiert werden kann.

Wie FIG. 4 zeigt, sind alle vier Gitter 6, 7, 6', 7' der beiden Gassensoren 1, 1' zu der elektrischen Messbrücke 31 verschaltet, in der die Gitter 6, 7 bzw. 6', 7' jedes der beiden Gassensoren 1 und 1' jeweils einander diagonal gegenüberliegen.

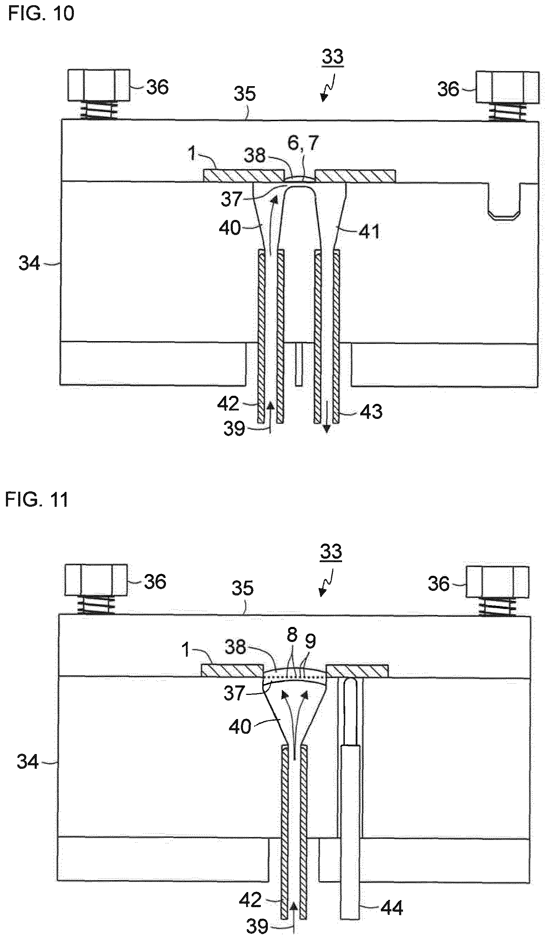

FIG. 10 und FIG. 11 zeigen ein Ausführungsbeispiel eines den Gassensor 1 beinhaltenden Wärmeleitfähigkeitsdetektors 33 einmal in einem Schnitt längs zu den Gittern 6, 7 bzw. den Gitterstegen 8, 9 und einmal in einem Schnitt quer dazu. Der Gassensor 1 ist zwischen zwei Bauteilen, hier einem blockförmigen Grundkörper 34 (z. B. aus Aluminium), und einem Deckel 35 (z. B. aus Aluminium oder Polyetheretherketon (PEEK)), in einer Aussparung des Deckels 35 und mit den Gittern 6, 7 zu dem Grundkörper 34 hin liegend angeordnet. Die Bauteile 34, 35 sind mittels Schrauben 36 und unter Zwischenlage einer hier nicht gezeigten Flächendichtung oder Dichtungsfolie miteinander verbunden. Sowohl der Grundkörper 34 als auch der Deckel 35 enthalten jeweils eine zu den Gittern 6, 7 hin offene und mit der Fensteröffnung 5 des Gassensors 1 fluchtende Mulde 37, 38. Die beiden Mulden 37, 38 bilden einen Messraum, in dem die Gitter 6, 7 von einem Messgas 39 umströmt werden, das über zwei Gasanschlüsse 40, 41 in den Messraum eingeleitet und aus diesem herausgeleitet wird. Grundsätzlich kann jeder der beiden Bauteile 34, 35 jeweils einen der beiden Gasanschlüsse 40, 41 enthalten. Zur Vereinfachung des konstruktiven Aufbaus des Wärmeleitfähigkeitsdetektors 33 und seiner Verwendung befinden sich bei dem gezeigten Beispiel beide Gasanschlüsse 40, 41 in dem Grundkörper 34 und münden in den Bereichen der Enden der Gitter 6, 7 in die Mulde 37. Die Gasanschlüsse 40, 41 sind beispielsweise durch Fräs- oder Laserbearbeitung in Form von Kanälen in dem Grundkörper 34 ausgebildet, in die Kanülen 42, 43 eingesetzt sind. Die Kontaktierung des Gassensors 1 erfolgt ebenfalls auf der Seite des Grundkörpers 34 durch Federkontaktstifte 44.

Die zunächst röhrchenförmigen Gasanschlüsse 40, 41 erweitern sich in Richtung zu der Mulde 37 hin auf die Breite der Gitter 6, 7, so dass eine laminare Aufspreizung oder Auffächerung des Messgases 39 erfolgt und das Messgas 39 über die gesamte Fläche der Gitter 6, 7 strömt. Damit das Messgas 39 nicht nur an den Stegen 8, 9 der Gitters 6, 7 entlang streift, sondern diese vollständig umströmt, kann der Boden der Mulde 37 in Längsrichtung des Gitter 6, 7 bzw. der Gitterstege 8, 9 konvex gekrümmt sein. Zusätzlich kann der Boden der anderen Mulde 38 in dem Deckel 35 in Längsrichtung der Gitters 6, 7 entsprechend konkav gekrümmt sein, so dass der Abstand zwischen den Böden beider Mulden 37, 38 weitgehend gleichbleibt und keine Erweiterung oder Verengung des Messraums in Richtung der Strömung des Messgases 39 stattfindet.

Die Gitter 6, 7 sind in der Messbrücke 31 verschaltet, so wie dies in FIG. 4 gezeigt ist.

Bei Verwendung in, z. B., in einem Gaschromatographen kann ein weiterer baugleicher Gassensor bzw. Wärmeleitfähigkeitsdetektor in einer Referenzgasströmung und mit den Gittern längs zur Strömungsrichtung angeordnet sein, wobei alle vier Gitter der beiden Gassensoren zu der elektrischen Messbrücke 31 verschaltet sind und in der die Gitter jedes der beiden Gassensoren jeweils einander diagonal gegenüberliegen.

## Patentansprüche

1. Thermoresistiver Gassensor (1) mit zwei gleichen, flachen durchströmbaren Gittern (6, 7), die aus einem Halbleitermaterial (4) mit einer vorgegebenen Leitfähigkeitsart bestehen und in einander diagonal gegenüberliegenden Zweigen einer elektrischen Messbrücke (31) verschaltet sind, wobei jedes Gitter (6, 7) parallel nebeneinander verlaufende und an den Enden (10, 11; 12, 13) elektrisch parallel geschaltete Gitterstege (8, 9) aufweist, **dadurch gekennzeichnet, dass** die Gitterstege (8, 9) der beiden Gitter (6, 7) abwechselnd nebeneinander in einer gemeinsamen Gitterebene liegend sich über eine Fensteröffnung (5) in einer Trägerplatte (2) erstrecken, wobei die flachen Gitter (6, 7) an der Fensteröffnung (5) senkrecht zur Trägerplatte (2) von einem Gas (28, 39) durchströmbar ist.

2. Thermoresistiver Gassensor (1) nach Anspruch 1, **dadurch gekennzeichnet, dass** die Gitterstege (8, 9) in der Gitterebene s-förmig verlaufend ausgebildet sind.

3. Thermoresistiver Gassensor (1) nach Anspruch 1 oder 2, **dadurch gekennzeichnet, dass** die Gitterstege (8, 9) über die Breite der Gitter (6, 7) variierende Querschnittsflächen aufweisen.

4. Thermoresistiver Gassensor (1) nach einem der vorangehenden Ansprüche, **dadurch gekennzeichnet,**
**dass** das Halbleitermaterial in Form einer Halbleiterschicht (4) auf einem die Trägerplatte bildenden Halbleitersubstrat (2) ausgebildet ist, welche sich über die Fensteröffnung (5) in dem Halbleitersubstrat (2) erstreckt und dort in Form der beiden Gitter (6, 7) ausgebildet ist,
**dass** die Halbleiterschicht (4) außerhalb der Fensteröffnung (5) in vier sich mindestens über die Breite der Gitter (6, 7) erstreckenden Bereichen Metallisierungen (14, 15, 16, 17) trägt, die an den vier Enden (10, 11, 12, 13) der beiden Gitter (6, 7) die Gitterstege (8, 9) elektrisch miteinander verbinden, und
**dass** die Halbleiterschicht (4) außerhalb der Fensteröffnung (5) Trennstrukturen (26, 27) enthält, die vier Enden der Gitter (10, 11, 12, 13) voneinander isolieren.

5. Thermoresistiver Gassensor (1) nach Anspruch 4, **dadurch gekennzeichnet, dass** zwischen dem Halbleitersubstrat (2) und der Halbleiterschicht (4) eine Isolierschicht (3) ausgebildet ist.

6. Thermoresistiver Gassensor (1) nach Anspruch 4 oder 5, **dadurch gekennzeichnet, dass** sich die vier Metallisierungen (14, 15, 16, 17) in einer Richtung um ein vorgegebenes Maß über die Breite der Gitter (6, 7) hinaus erstrecken, um dort Kontaktflächen (18, 19, 20, 21) zu bilden, und dass das Halbleitersubstrat (2) in der anderen Richtung spiegelsymmetrisch zu den Kontaktflächen (18, 19, 20, 21) angeordnete durchgehende Öffnungen (22, 23, 24, 25) enthält.

7. Strömungssensor (32) mit zwei in einer zu messenden Gasströmung hintereinander und mit ihren Gittern (6, 7; 6', 7') senkrecht zur Strömungsrichtung angeordneten baugleichen thermoresistiven Gassensoren (1, 1') gemäß einem der Ansprüche 1 bis 5, wobei alle vier Gitter (6, 7; 6', 7') der beiden Gassensoren (1, 1') zu der elektrischen Messbrücke (31) verschaltet sind, in der die Gitter (6, 7; 6', 7') jedes der beiden Gassensoren (1, 1') jeweils einander diagonal gegenüberliegen.

8. Strömungssensor (32) mit zwei in einer zu messenden Gasströmung hintereinander und mit ihren Gittern (6, 7; 6', 7') senkrecht zur Strömungsrichtung angeordneten baugleichen thermoresistiven Gassensoren (1, 1') gemäß Anspruch 6, **dadurch gekennzeichnet, dass** alle vier Gitter (6, 7; 6', 7') zu der elektrischen Messbrücke (31) verschaltet sind, in der die Gitter (6, 7; 6', 7') jedes der beiden Gassensoren (1, 1') jeweils einander diagonal gegenüberliegen und dass die beiden Gassensoren (1, 1') um 180° zueinander versetzt sind, so dass die Kontaktflächen (18', 19', 20', 21') des unteren Gassensors (1') durch die Öffnungen (24, 25, 22, 23) des darauf liegenden Gassensors (1) hindurch zugänglich sind.

9. Wärmeleitfähigkeitsdetektor (33) mit einem in einer Messgasströmung und mit den Gittern (6, 7) längs zur Strömungsrichtung angeordneten thermoresistiven Gassensor (1) gemäß einem der Ansprüche 1 bis 6.

10. Wärmeleitfähigkeitsdetektor (33) gemäß Anspruch 9, **dadurch gekennzeichnet, dass** der Gassensor (1) zwischen zwei Bauteilen (34, 35) gehalten ist, die jeweils eine zu den Gittern (6, 7) hin offene und mit der Fensteröffnung (5) in der Trägerplatte (2) fluchtende Mulde (37, 38) enthalten, wobei jede der beiden Mulden jeweils einen Gasanschluss oder eine der beiden Mulden (37, 38) zwei Gasanschlüsse (40, 41) in den Bereichen der Enden der Gitter (6, 7) aufweist und die Gasanschlüsse (40, 41) sich in Richtung zu der jeweiligen Mulde (37) hin auf die Breite der Gitter (6, 7) erweitern.

11. Wärmeleitfähigkeitsdetektor (33) gemäß Anspruch 9 oder 10, **dadurch gekennzeichnet, dass** ein weiterer baugleicher thermoresistiver Gassensor in einer Referenzgasströmung und mit den Gittern längs zur Strömungsrichtung angeordnet ist und dass alle vier Gitter der beiden Gassensoren zu der elektrischen Messbrücke (31) verschaltet sind, in der die Gitter jedes der beiden Gassensoren jeweils einander diagonal gegenüberliegen.

## Claims

1. Thermoresistive gas sensor (1) with two identical, flat meshes (6, 7) through which gas (28, 29) can flow, and which consist of a semiconductor material (4) with a predetermined conductivity and are interconnected in sections of an electric measuring bridge (31) which are diametrically opposite one another, wherein each mesh (6, 7) has mesh webs (8, 9) which run in parallel adjacent to one another and are connected electrically in parallel at the ends (10, 11; 12, 13), **characterised in that** the mesh webs (8, 9) of the two meshes (6, 7) extend alternately adjacent to one another in a shared mesh plane horizontally across a window opening (5) in a carrier plate (2), wherein gas (28, 29) can flow through the flat meshes (6, 7) on the window opening (5) at a right angle to the carrier plate (2).

2. Thermoresistive gas sensor (1) according to claim 1, **characterised in that** the mesh webs (8, 9) are embodied to run in an s-shape in the mesh plane.

3. Thermoresistive gas sensor (1) according to claim 1 or 2, **characterised in that** the mesh webs (8, 9) have crosssectional surfaces which vary across the width of the meshes (6, 7).

4. Thermoresistive gas sensor (1) according to one of the preceding claims, **characterised in that** the semiconductor material is embodied in the form of a semiconductor layer (4) on a semiconductor substrate (2) forming the carrier plate, which extends across the window opening (5) in the semiconductor substrate (2) and is embodied there in the form of the two meshes (6, 7),
that the semiconductor layer (4) outside of the window opening (5) carries metallisations (14, 15, 16, 17) in four areas extending at least across the width of the meshes (6, 7), said metallisations connecting the mesh webs (8, 9) electrically to one another at the four ends (10, 11, 12, 13) of the two meshes (6, 7), and
that the semiconductor layer (4) contains separating structures (26, 27) outside of the window opening (5), which insulate four ends of the meshes (10, 11, 12, 13) from one another.

5. Thermoresistive gas sensor (1) according to claim 4, **characterised in that** an insulating layer (3) is embodied between the semiconductor substrate (2) and the semiconductor layer (4).

6. Thermoresistive gas sensor (1) according to claim 4 or 5, **characterised in that** the four metallisations (14, 15, 16, 17) extend in a direction about a predetermined degree beyond the width of the meshes (6, 7) in order to form there contact surfaces (18, 19, 20, 21) and that the semiconductor substrate (2) in the other direction contains through openings (22, 23, 24, 25) arranged in mirror symmetry with the contact surfaces (18, 19, 20, 21).

7. Flow sensor (32) with two thermoresistive gas sensors (1, 1') of the same construction arranged one behind the other in a gas flow to be measured and with its meshes (6, 7; 6', 7') at right angles to the flow direction according to one of claims 1 to 5, wherein all four meshes (6, 7;, 6', 7') of the two gas sensors (1, 1') are interconnected to form the electric measuring bridge (31), in which the meshes (6, 7; 6',7') of each of the two gas sensors (1, 1') are diametrically opposite one another in each case.

8. Flow sensor (32) with two thermoresistive gas sensors (1, 1') of the same construction arranged one behind the other in a gas flow to be measured and with its meshes (6, 7; 6', 7') at right angles to the flow direction according to claim 6, **characterised in that** all four meshes (6, 7; 6', 7') are interconnected to form the electric measuring bridge (31), in which the meshes (6, 7 6', 7') of each of the two gas sensors (1, 1') are diametrically opposite one another in each case and that the two gas sensors (1, 1') are offset by 180° relative to one another so that the contact surfaces (18', 19', 20', 21') of the lower gas sensor (1') are accessible through the openings (24, 25, 22, 23) of the gas sensor (1) disposed thereupon.

9. Thermal conductivity detector (33) with a thermoresistive gas sensor (1) arranged in a measuring gas flow and with the meshes (6, 7) longitudinally relative to the flow direction according to one of claims 1 to 6.

10. Thermal conductivity detector (33) according to claim 9, **characterised in that** the gas sensor (1) is held between two components (34, 35), each of which contains a cavity (37, 38) which opens toward the meshes (6, 7) and is aligned with the window opening (5) in the carrier plate (2), wherein each of the two cavities in each case has a gas connection or one of the two cavities (37, 38) has two gas connections (40, 41) in the regions of the ends of the meshes (6, 7) and the gas connections (40, 41) extend in the direction of the respective cavity (37) over the width of the meshes (6, 7).

11. Thermal conductivity detector (33) according to claim 9 or 10, **characterised in that** a further thermoresistive gas sensor of the same construction is arranged in a reference gas flow and with the meshes longitudinally to the flow direction and that all four meshes of the two gas sensors are interconnected to form the electric measuring bridge (31), in which the meshes of each of the two gas sensors are diametrically opposite one another in each case.

## Revendications

1. Détecteur (1) de gaz thermorésistif, comprenant deux grilles (6, 7) pareilles, plates, pouvant être traversées, qui sont en un matériau (4) semiconducteur ayant un type de conductivité donné à l'avance et qui sont montées dans des branches, opposées en diagonale l'une à l'autre, d'un pont (31) de mesure électrique, dans lequel chaque grille (6, 7) a des barreaux (8, 9) de grille s'étendant en parallèle les uns à côté des autres et montés en parallèle électriquement aux extrémités (10, 11 ; 12, 13), **caractérisé en ce que** les barreaux (8, 9) des deux grilles (6, 7) s'étendent en alternance les uns à côté des autres dans un plan de grille commun sur une ouverture (5) de fenêtre dans une plaque (2) de support, dans lequel les grilles (6, 7) plates peuvent être traversées par un gaz (28, 39) perpendiculairement à la plaque (2) de support à l'ouverture (5) de fenêtre.

2. Détecteur (1) de gaz thermorésistif suivant la revendication 1, **caractérisé en ce que** les barreaux (8, 9) de la grille sont constitués en s'étendant en forme de s dans le plan de grille.

3. Détecteur (1) de gaz thermorésistif suivant la revendication 1 ou 2, **caractérisé en ce que** les barreaux (8, 9) de grille ont des surfaces de section transversale variables sur la largeur des grilles (6, 7).

4. Détecteur (1) de gaz thermorésistif suivant l'une des revendications précédentes, **caractérisé**
**en ce que** le matériau semiconducteur est constitué sous la forme d'une couche (4) de semiconducteur sur un substrat (2) de semiconducteur formant la plaque de support, qui s'étend dans le substrat (2) de semiconducteur sur l'ouverture (5) de fenêtre et y est constituée sous la forme des deux grilles (6, 7),
**en ce que** la couche (4) de semiconducteur porte, à l'extérieur de l'ouverture (5) de fenêtre, dans quatre parties s'étendant au moins sur la largeur des grilles (6, 7), des métallisations (14, 15, 16, 17), qui, aux quatre extrémités (10, 11, 12, 13) des deux grilles (6, 7), connectent les barreaux (8, 9) de grille électriquement entre eux, et
**en ce que** la couche (4) de semiconducteur comporte, à l'extérieur de l'ouverture (5) de fenêtre, des structures (26, 27) de séparation, qui isolent les quatre extrémités des grilles (10, 11, 12, 13) les unes des autres.

5. Détecteur (1) de gaz thermorésistif suivant la revendication 4, **caractérisé en ce qu'**une couche (3) isolante est constituée entre le substrat (2) de semiconducteur et la couche (4) de semiconducteur.

6. Détecteur (1) de gaz thermorésistif suivant la revendication 4 ou 5, **caractérisé en ce que** les quatre métallisations (14, 15, 16, 17) s'étendent dans une direction, d'une mesure donnée à l'avance, au-delà de la largeur des grilles (6, 7), pour y former des surfaces (18, 19, 20, 21) de contact, et **en ce que** le substrat (2) de semiconducteur comporte, dans l'autre direction, des ouvertures (22, 23, 24, 25) traversantes disposées d'une manière symétrique comme en un miroir par rapport aux surfaces (18, 19, 20, 21) de contact.

7. Détecteur (32) d'écoulement ayant deux détecteurs (1, 1') de gaz thermorésistifs de même construction disposés l'un derrière l'autre dans un écoulement de gaz à mesurer et en ayant leurs grilles (6, 7 ; 6', 7') disposées perpendiculairement à la direction d'écoulement suivant l'une des revendications 1 à 5, dans lequel toutes les quatre grilles (6, 7 ; 6', 7') des deux détecteurs (1, 1') de gaz sont montés en le pont (31) de mesure électrique, dans lequel les grilles (6, 7 ; 6', 7') de chacun des deux détecteurs (1, 1') de gaz sont opposées l'une à l'autre respectivement en diagonale.

8. Détecteur (32) d'écoulement ayant deux détecteurs (1, 1') de gaz thermorésistifs de même construction montés l'un derrière l'autre dans un écoulement de gaz à mesurer et ayant leurs grilles (6, 7 ; 6', 7') disposées perpendiculairement à la direction d'écoulement suivant la revendication 6, **caractérisé en ce que** toutes les quatre grilles (6, 7 ; 6', 7') sont montées en le pont (31) de mesure électrique, dans lequel les grilles (6, 7 ; 6', 7') de chacun des deux détecteurs (1, 1') de gaz sont opposées respectivement en diagonale l'une à l'autre, et **en ce que** les deux détecteurs (1, 1') de gaz sont décalés l'un par rapport à l'autre de 180°, de sorte que les surfaces (18', 19', 20', 21') de contact du capteur (1') de gaz inférieur soient accessibles en passant par les ouvertures (24, 25, 22, 23) du détecteur (1) de gaz se trouvant au-dessus.

9. Détecteur (33) de conductibilité de la chaleur comprenant un détecteur (1) de gaz thermorésistif suivant l'une des revendications 1 à 6 disposé dans un écoulement de gaz de mesure et en ayant les grilles (6, 7) le long de la direction d'écoulement.

10. Détecteur (33) de conductibilité de la chaleur suivant la revendication 9, **caractérisé en ce que** le détecteur (1) de gaz est retenu entre deux pièces (34, 35), qui comportent respectivement une cuvette (37, 38) ouverte vers les grilles (6, 7) et au ras de l'ouverture (5) de fenêtre dans la plaque (2) de support, dans lequel chacune des deux cuvettes a respectivement un raccord pour du gaz ou l'une des deux cuvettes (37, 38) a deux raccords (40, 41) pour du gaz dans les parties des extrémités des grilles (6, 7) et les raccords (40, 41) pour du gaz s'élargissent dans la direction vers la cuvette (37) respective à la largeur des grilles (6, 7).

11. Détecteur (33) de conductibilité de la chaleur suivant la revendication 9 ou 10, **caractérisé en ce qu'**un autre capteur de gaz thermorésistif de même construction est monté dans un écoulement de gaz de référence et en ayant les grilles le long de la direction d'écoulement, et **en ce que** toutes les quatre grilles des deux capteurs de gaz sont montées en le pont (31) de mesure électrique, dans lequel les grilles de chacun des deux détecteurs de gaz sont opposées respectivement en diagonale l'une à l'autre.
